(19) Europäisches Patentamt
European Patent Office
Office européen des brevets

(11) **EP 3 936 892 A1**

(12) **EUROPÄISCHE PATENTANMELDUNG**

(43) Veröffentlichungstag:
**12.01.2022 Patentblatt 2022/02**

(21) Anmeldenummer: **20184520.3**

(22) Anmeldetag: **07.07.2020**

(51) Int Cl.:
*G01S 13/95* (2006.01)  *G01S 7/41* (2006.01)
*G01S 7/292* (2006.01)  *G01S 13/18* (2006.01)
*G01S 13/44* (2006.01)  *G01S 13/58* (2006.01)
*G01S 13/60* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **HENSOLDT Sensors GmbH
82024 Taufkirchen (DE)**

(72) Erfinder:
• **Wittekind, Wolfgang C.
88471 Laupheim (DE)**
• **Beer, Stefan
89275 Elchingen (DE)**
• **Feil, Peter
89231 Neu-Ulm (DE)**

(74) Vertreter: **LifeTech IP
Spies & Behrndt Patentanwälte PartG mbB
Elsenheimerstraße 47a
80687 München (DE)**

(54) **VORRICHTUNG UND VERFAHREN ZUM KOMPENSIEREN VON DOPPLERAUFWEITUNGEN**

(57)     Eine Vorrichtung (100) zum Kompensieren von wetterunabhängigen Doppleraufweitungen in Radarsignalen eines Wetterradarsystems (200) ist offenbart. Die Vorrichtung umfasst: eine Empfangseinrichtung (110) zum Empfangen einer Darstellung (50) der Radarsignale, eine Ermittlungseinrichtung (120) und eine Kompensationseinrichtung (130). Die Empfangseinrichtung (110). Die Darstellung umfasst Pixel einer Entfernung-Doppler-Matrix umfasst. Die Ermittlungseinrichtung (120) ist ausgebildet, um für die Pixel (75) Azimutwinkel (Azi) durch Feinpeilung zu ermitteln. Die Kompensationseinrichtung (130) ist ausgebildet, um wetterunabhängige Dopplerverschiebungen für die Pixel (75) basierend auf den ermittelten Azimutwinkel (Azi; AziMopu) zu korrigieren und so die wetterunabhängigen Doppleraufweitungen zu kompensieren und als eine kompensierte Darstellung (150) bereitzustellen.

Fig. 2

**Beschreibung**

Die vorliegende Erfindung bezieht sich auf eine Vorrichtung und ein Verfahren zum Kompensieren von wetterunabhängigen Doppleraufweitungen in Radarsignalen eines Wetterradars, z.B. infolge von Eigenbewegungen, und insbesondere auf eine Turbulenzdetektion mittels Feinpeilung. Außerdem bezieht sich die Erfindung auf Kompensationen von Strahlbreiten-bedingten Doppleraufweitungen von Radarsignalen schnell fliegender kleiner Radar-Systeme, um autonom kritische Regengebiete, die nicht durchflogen werden sollten, zu detektieren.

HINTERGRUND

Ein Charakteristikum von kritischen Wettersituationen sind häufig Luftbewegungen, die sich mit hoher Geschwindigkeit in verschiedenen Richtungen bewegen (infolge von Eigenrotationen, Scherwinden, Turbulenzen etc.). Die unterschiedlichen Bewegungsrichtungen führen zu verschiedenen Dopplerverschiebungen und somit zu einer Dopplerverbreiterung für eine genutzte Frequenz.

Die Stärke der Dopplerverbreiterung kann als ein Indiz für turbulente Wettersituationen angesehen werden, die sich beispielsweise durch sogenannte Puls-Doppler-Radarverfahren detektiert lassen. Wenn ein kritischer Wert überschritten wird, kann dies als eine potentielle Gefahrensituation gewertet werden. Beispielsweise zeigen Extremtornados auf sehr kleinen Raumgebieten sehr hohe Dopplerverbreiterungen, da sich zirkulierende Luftströme mit hoher Geschwindigkeit einerseits auf ein Radarsystem zubewegen und andererseits sich von dem Radarsystem fortbewegen und somit gegenläufige Dopplerverschiebungen verursachen.

Konventionelle Wetterradarsysteme nutzen bisher bodenfeste Systeme ohne Eigengeschwindigkeit, die große Antennen mit schmalen Antennenkeulen aufweisen. Es besteht aber ein fortlaufender Bedarf hochwertige Wetterradarsysteme auf Flugfahrzeuge (z.B. Drohnen, Flugzeuge) zu nutzen, sodass dann unabhängig von Bodenstationen permanent die Wettersituation in Flugrichtung überwacht werden kann und gegebenenfalls extremen Wettersituationen wie beispielsweise Tornados ausgewichen werden kann.

Bei bewegten Wetterradarsystemen treten jedoch die folgenden Probleme auf. Die Eigenbewegung des Flugfahrzeuges selbst führt bereits zu Doppleraufweitungen infolge der Eigengeschwindigkeit des Wetterradarsystems, die das Bild der erfassten Wettersituation negativ beeinflussen können. Ein gleicher Effekt wird durch die Strahlbreite der Radarsignale hervorgerufen. Auch hier kommt es bei Ablagen zu unterschiedlichen Relativgeschwindigkeiten innerhalb des Radarstrahls und somit zu einer inhärenten Doppleraufweitung. Diese Doppleraufweitungen sind aber nicht vom Wetter abhängig und treten unabhängig vom Wetter auf. Sie stören daher die Detektion von kritischen Wettersituationen.

Daher besteht ein Bedarf nach Vorrichtungen zum Kompensieren der wetterunabhängigen Doppleraufweitungen in Radarsignalen.

Kurzbeschreibung der Erfindung

Die oben genannte Aufgabe wird durch eine Vorrichtung nach Anspruch 1 und ein Verfahren nach Anspruch 13 gelöst. Die abhängigen Ansprüche beziehen sich auf vorteilhafte Weiterbildungen der Vorrichtung nach Anspruch 1.

Die vorliegende Erfindung bezieht sich auf eine Vorrichtung zum Kompensieren von wetterunabhängigen Doppleraufweitungen in Radarsignalen eines Wetterradarsystems. Die Vorrichtung umfasst: eine Empfangseinrichtung zum Empfangen einer Darstellung der Radarsignale, eine Ermittlungseinrichtung und eine Kompensationseinrichtung. Die Darstellung umfasst Pixel einer Entfernung-Doppler-Matrix. Die Ermittlungseinrichtung ist ausgebildet ist, um für die Pixel (die z.B. zu verschiedenen Dopplerwerten gehören) Azimutwinkel durch Feinpeilung zu ermitteln. Die Kompensationseinrichtung ist ausgebildet, um wetterunabhängige Dopplerverschiebungen für die Pixel basierend auf den ermittelten Azimutwinkel zu korrigieren und so die wetterunabhängigen Doppleraufweitungen zu kompensieren und als eine kompensierte Darstellung bereitzustellen.

Es versteht sich, dass der Begriff die Pixel hier und im Folgenden insbesondere den Fall umfasst, dass alle Pixel bei der Feinpeilung bzw. der Kompensation betrachtet werden. Dies ist in der Regel die bevorzugte Ausführungsform. Es ist aber nicht zwingend grundsätzlich alle Pixel zu betrachten, einzelne Pixel können im konkreten Fall auch irrelevant sein.

Die Entfernungs-Doppler-Matrix stellt lokale Relativgeschwindigkeiten (ausgedrückt durch Dopplerverschiebungswerte) in einem Strahl (Beam) und Entfernungswerte in Bezug. Der Wertebereich der Dopplerwerte ist meistens nicht kontinuierlich, sondern in diskrete Bereiche (sogenannten Doppler-Gates) unterteilt. Gleiches kann für die Entfernung gelten, die in Gates diskretisiert ist. Die kompensierte Darstellung kann an eine Auswerteeinheit (z.B. des Wetterradarsystems oder einer anderen Einheit) übermittelt werden, um die Lage dort zu bewerten. Hierbei können beispielsweise die folgenden Fragen geklärt werden: Wie kritisch ist die Wetterlage? Sind Ausweichmanöver auszuführen? Sollte eine Warnung gegeben werden?

Optional ist die Ermittlungseinrichtung ausgebildet, um zur Feinpeilung ein Phasenmonopulsverfahren zu nutzen.

Optional ist die Kompensationseinrichtung ausgebildet, um beim Kompensieren eine oder mehrere der folgenden Ursachen für die wetterunabhängigen Doppleraufweitungen zu berücksichtigen:

- eine Eigenbewegung des Wetterradarsystems,
- eine Abstrahlbreite des Radarsystems (z.B. Antennenhalbwertsbreite, Strahlbreite der Hauptkeule),
- einen Ablagewinkel.

Das genutzte Wetterradarsystem kann ausgebildet sein, um turbulentes Wetter in einem Raumgebiet zu detektieren und eine Grobpeilung vorzunehmen. In diesem Fall ist die Ermittlungseinrichtung optional ausgebildet, den Azimutwinkel für jeden Pixel des Raumgebietes relativ zur Grobpeilung über die Feinpeilung zu ermitteln. Die Kompensationseinrichtung ist optional ausgebildet, um für jeden Pixel des Raumgebietes die Eigenbewegung zu kompensieren (zumindest für alle Pixel, die in einem Entfernungs-Gate liegen).

Ausführungsbeispiele beziehen sich auch auf ein Wetterradsystem mit einer zuvor definierte Vorrichtung und einer Auswerteeinheit, die ausgebildet ist, um Radarsignale zu empfangen und basierend auf den Radarsignalen die Darstellung in Form der Entfernungs-Doppler-Matrix zu erzeugen.

Optional ist die Auswerteeinheit ausgebildet, um die Darstellung unter Nutzung eines Puls-Doppler-Verfahrens zu erzeugen.

Optional ist Auswerteeinheit weiter ausgebildet, um die Darstellung derart zu erzeugen, dass jedes Pixel einen Dopplerwertebereich (z. B. ein sogenanntes Doppler-Gate) und einen Entfernungswertebereich bildet (z.B. ein sogenanntes Range-Gate). Diese Bereiche sind frei wählbar und stellen beispielsweise eine Diskretisierung der Sensordaten dar, d.h. alle Sensordaten in einem bestimmten Bereich werden zusammengefasst zu einem Wert für das entsprechende Gate (Bereich).

Optional umfasst das Wetterradarsystem weiter ein Antennensystem, das eine Antennenhalbwertsbreite aufweist, die größer ist als 3° oder größer ist als 5° oder größer ist als 10°. Das Antennensystem ist insbesondere als eine Richtantenne ausgebildet, um gezielt Radarsignale in/aus einem bestimmten Raumbereich zu senden/zu erhalten. Optional ist das Antennensystem um einen Schwenkwinkel von maximal 40° schwenkbar. Insbesondere ist das Wetterradarsystem kein stationäres System, sondern ein Wetterradarsystem, welches auf einem Flugfahrzeug installiert sein kann.

Optional ist die Auswerteeinheit ausgebildet, um eine Grobpeilung basierend auf einer momentanen Ausrichtung des Antennensystems und einer Antennencharakteristik durchzuführen. Die Ermittlungseinrichtung kann dann ausgebildet sein, um die Feinpeilung innerhalb der Grobpeilung durchzuführen.

Die kompensierte Darstellung kann von der Vorrichtung der Auswerteeinheit bereitgestellt werden. Optional ist die Auswerteeinheit dann weiter ausgebildet, um eine Wertung der kompensierten Darstellung vorzunehmen (z.B. in kritisch, wenig kritisch und nicht kritisch) und basierend darauf zumindest eine der folgenden Reaktionen zu veranlassen:

- Darstellen von turbulentem Wetter in dem Raumgebiet auf einer Anzeige (im Flugfahrzeug oder einer Fluglenkstation für eine beispielhafte Drohne),
- Warnen vor dem turbulentem Wetter bei Überschreiten von einem Grenzwert (akustisch, grafisch, farblich etc.),
- Auslösen eines Ausweichmanövers für das Flugfahrzeug, um das Raumgebiet zu umfliegen.

Optional umfasst das Wetterradarsystem auch die (grafische) Anzeige, um turbulentes Wetter in dem Raumgebiet basierend auf der kompensierten Darstellung darzustellen.

Ausführungsbeispiele beziehen sich auch auf ein Flugfahrzeug mit einem Wetterradarsystem, wie es zuvor beschrieben war.

Ausführungsbeispiele beziehen sich auch auf ein Verfahren zum Kompensieren von wetterunabhängigen Doppleraufweitungen in Radarsignalen eines Wetterradarsystems. Das Verfahren umfasst:

- Empfangen einer Darstellung der Radarsignale, wobei die Darstellung Pixel einer Entfernung-Doppler-Matrix umfasst;
- Ermitteln von Azimutwinkeln für die Pixel durch Feinpeilung;
- Korrigieren von wetterunabhängige Dopplerverschiebungen für die Pixel basierend auf den ermittelten Azimutwinkel;
- Kompensieren der wetterunabhängigen Doppleraufweitungen; und
- Bereitstellen einer kompensierte Darstellung.

Alle zuvor beschriebenen Funktionen der Vorrichtung und/oder des Wetterradarsystems können als optionale weitere Verfahrensschritte in dem Verfahren zum Kompensieren ausgeführt werden.

Ausführungsbeispiele bieten eine Optimierung der Wetter-Warnfunktion einer Radargesteuerten Drohne, wobei wesentliche Aspekte wie folgt zusammengefasst werden können. Jedes Wetter-beobachtendes Radar sollte eine Warnfunktion gegen kritische Wettersituationen aufweisen. Ein Charakteristikum zur Entdeckung kritischer Wettersituationen kann eine starke Dopplerverbreiterung im detektierten Wettergebiet sein. Es gibt aber auch Doppler-Verbreiterungen im Radarmessprozess selbst, die den nachzuweisenden Effekt maskieren können. Diese Doppler-Verbreiterungen sind in guter Näherung proportional der 1) Eigenbewegung des antennentragenden Luftfahrzeuges 2) der empfindlichen Antennenstrahlbreite 3) der Winkelablage der Blickrichtung vom Geschwindigkeitsvektor der Drohne. Ein konventionelles Bodenfestes Wetterradar kennt diese messbedingte Verbreiterung nicht, da seine Eigengeschwindigkeit gleich Null ist. Ein konventionelles Verkehrsflugzeug ist davon viel weniger betroffen, da größenbedingt seine Antenne eine viel schmalere Antennenstrahlbreite aufweist und der Effekt damit viel kleiner ist.

Radargesteuerte Drohnen, für die Ausführungsbeispiele insbesondere bestimmt sind, fliegen recht schnell. Ebenso sind sie klein, haben damit kleine Radar-Antennen mit großen Antennenstrahlbreite. Im Effekt ist damit am vorderen Antennenstrahlrand der Doppler eines rückstrahlenden Gebietes erheblich grösser als am hinteren Strahlrand. Das maskiert die zu messende Wetterbedingte Doppler-Verbreiterung.

Puls-Doppler-Radare, die gemäß Ausführungsbeispielen zum Einsatz kommen, weisen im Nachweisgebiet der Radarkeule eine sogenannte Range-Dopplermatrix (RD-Matrix) auf. Diese RD-Matrix unterteilt die Winkelregionen des Antennenstrahles mit verschiedenen Dopplern in ca. 10 verschiedene Fein-Winkel-Gebiete über den empfangenen Antennenbereich. Diese werden gemäß Ausführungsbeispiele via Monopuls gepeilt. Aufgrund der bekannten Geometrie wird die gemessene Doppleränderung über die Antennenstrahlbreite per Subtraktion gut kompensiert.

Ein wesentlicher Vorteil von Ausführungsbeispielen besteht somit in der besseren Detektion von kritischen Wettersituationen bis in viel höhere Ablagen. Ausführungsbeispiele beziehen sich somit insbesondere auf dieses Kompensationsverfahren, das bei kleinen schnellen Drohnen gegen Messbedingte Doppler-Aufweitungs-Probleme hilft.

Ausführungsbeispiele lösen somit zumindest einen Teil der eingangs erwähnten Probleme dadurch, dass die erfassten Radarsignale pixelweise nachbehandelt werden, und zwar derart, dass über eine Feinpeilung der Azimutwinkel zu dem jeweiligen Pixel ermittelt wird. Ohne Feinpeilung werden alle Dopplerwert dem Azimutwinkel des Radarstrahls zugeordnet (Grobpeilung). Mit dem genaueren Azimutwinkel kann eine Korrektur von wetterunabhängigen Doppleraufweitungen kompensiert werden. Insbesondere kann ein Eigengeschwindigkeitsanteil, eine Ablage (Winkelbereiche zu einer Flugrichtung) oder auch eine Strahlbreite kompensiert werden, die ansonsten alle zu Doppleraufweitungen führen können, die nicht vom Wetter abhängen. Die Radarsignale können insbesondere in Form einer 2-dimensionalen diskreten Darstellung vorliegen, wobei jeder Eintrag (der einem Pixel entspricht) einem Entfernungsbereich und einem Frequenzbereich (entsprechend einer Dopplerverschiebung) zugeordnet ist.

Im Gegensatz zu den bekannten Wetterradarsystemen können auf diese Weise schnell Artefakte kompensiert werden, die infolge der Eigenbewegungen des Wetterradarsystems entstehen. Ausführungsbeispiele erlauben eine Erweiterung von konventionellen Wetter-Turbulenz-Detektions-Verfahren auf schnell, eigenbewegte Radarsysteme mit breiter Radarkeule wie sie beispielsweise als Teil einer autonom fliegenden Drohne zum Einsatz kommen, sodass ein sogenannte Sense-and-Avoid-Modus (Sense-and-Avoid = Detektieren und Ausweichen) effektiv nutzbar wird.

Damit können überflüssige Ausweichmanöver vermieden werden, da nur wetterverursachte Doppleraufweitungen dargestellt werden - nicht aber Aufweitungen infolge der Eigengeschwindigkeit, Ablagen und/oder Strahlbreiten von Radarsignalen. Damit werden Wetterszenarios völlig ohne Turbulenz (z.B. "warmen Landregen") nicht irrtümlicherweise als kritisch detektiert und können durchflogen werden. Ausführungsbeispiele liefern eine klare Trennung zwischen Doppleraufweitungen, die durch Turbulenz oder allein durch die Eigenbewegung verursacht werden. Dadurch werden wirklich kritische Situationen deutlich genauer detektiert, als es bei konventionellen Wetterradarsystemen möglich ist.


KURZBESCHREIBUNG DER FIGUREN

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.

Fig. 1     zeigt ein Ausführungsbeispiel für eine Vorrichtung zum Kompensieren von wetterunabhängigen Doppleraufweitungen.

Fig. 2     zeigt ein mögliches Anwendungsscenario der Vorrichtung aus der Fig. 1.

Fig. 3     veranschaulicht weitere Details zur Durchführung der Feinpeilung gemäß Ausführungsbeispielen.

Fig. 4     zeigt beispielhaft eine Simulation für die Radarsignalverarbeitung.

Fig. 5     zeigt eine beispielhafte Draufsicht (Azimut-Ebene) auf die einzelnen Pixel in dem erfassten Winkelraumgebiet.

Fig. 6     zeigt beispielhaft eine Entfernungs-Doppler-Matrix, wie sie in Ausführungsbeispielen als Darstellung der Radarsignale genutzt wird.

Fig. 7     zeigt ein Flussdiagramm für ein Verfahren zum Kompensieren von wetterunabhängigen Doppleraufweitungen gemäß Ausführungsbeispielen.

## DETAILLIERTE BESCHREIBUNG

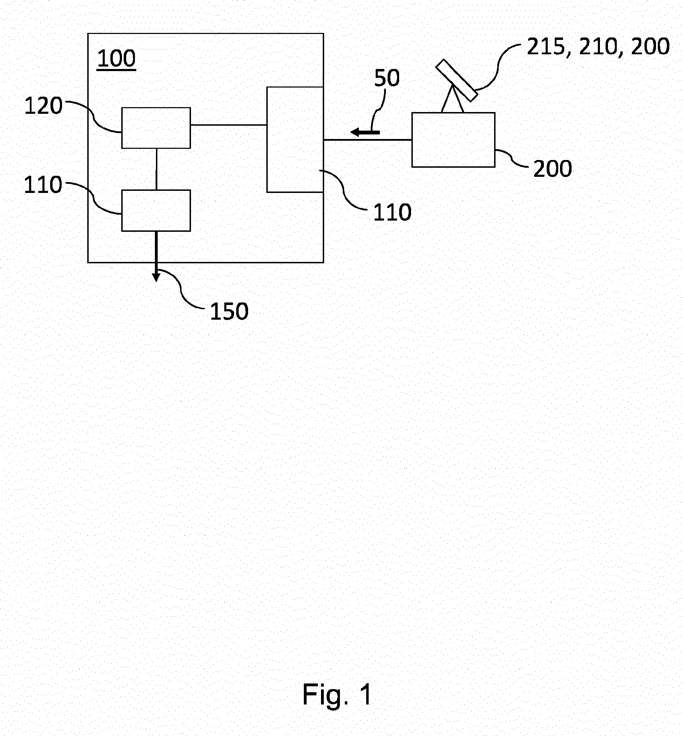

**Fig. 1** veranschaulicht ein Ausführungsbeispiel für eine Vorrichtung 100 zum Kompensieren von wetterunabhängigen Doppleraufweitungen in Radarsignalen eines Wetterradarsystems 200. Die Radarsignale können von einem Antennensystem 215 erhalten und nach einer Vorverarbeitung in eine gewünschte Darstellung weitergeleitet werden. Das Wetterradarsystem 200 kann außerdem Antennen 210, 220 umfassen, die für eine Feinpeilung (z.B. mittels Phasenmonopulsverfahren) geeignet sind.

Die Vorrichtung 100 umfasst eine Empfangseinrichtung 110 zum Empfangen der Darstellung 50 der Radarsignale, wobei die Darstellung Pixel einer Entfernung-Doppler-Matrix umfasst. Die Vorrichtung 100 umfasst weiter eine Ermittlungseinrichtung 120 zum Durchführen einer Feinpeilung des Azimutwinkels für die Pixel, die dazu beispielsweise das Wetterradarsystem 200 ansteuern kann, damit es die Feinpeilungen für die Pixel durchführt und entsprechende Daten an die Vorrichtung 100 zurücksendet. Es ist ebenso möglich, dass zur Feinpeilung ein anderes System bzw. andere Antennen genutzt werden, die nicht Teil des Wetterradarsystem sind. Schließlich umfasst die Vorrichtung 100 eine Kompensationseinrichtung 130, die ausgebildet ist, um wetterunabhängige Dopplerverschiebungen für die Pixel basierend auf den ermittelten Azimutwinkel zu korrigieren und damit die wetterunabhängigen Doppleraufweitungen zu kompensieren. Nach dem Kompensieren kann eine kompensierte Darstellung 150 bereitgestellt werden.

Ausführungsbeispiele können insbesondere für jedes dargestellte Pixel (z.B. zu einer Entfernung) den genauen Azimutwinkel über die Feinpeilung ermitteln und über Formeln die Eigengeschwindigkeit des Flugobjekts und die Ablage von der Geradeausrichtung kompensieren, so dass die Dopplerverbreitungen genauere Resultate liefern.

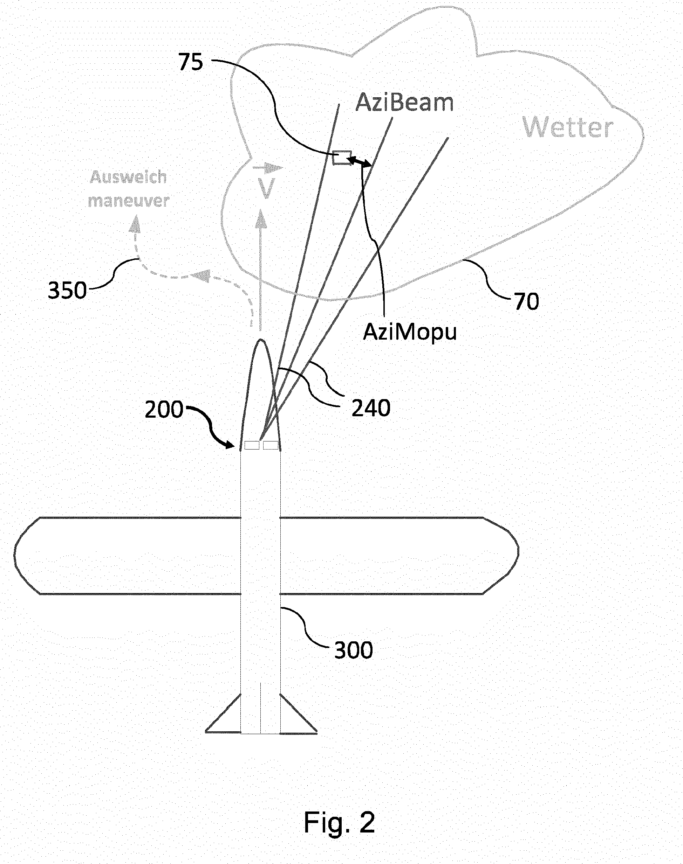

**Fig. 2** zeigt beispielhaft eine Anwendung der Vorrichtung 100 gemäß einem Ausführungsbeispiel für ein Flugfahrzeug 300 wie z.B. eine Drohne (oder in einem Flugzeug), das eine erhebliche Eigengeschwindigkeit v vor einem potenziell bedrohlichem Wetterszenario 70 aufweisen kann, dem ggf. radargesteuert ausgewichen werden soll (z.B. entlang eines Ausweichkurses 350).

Dazu ist auf einem Flugfahrzeug 300 ein Radarsystem 200 mit beispielsweise zwei oder mehr Antennen 210, 220 installiert, die in der Lage sind, um über eine Feinpeilung eine Korrektur des Azimutwinkels AziBeam zu ermitteln. Dazu ist das Radarsystem 200 zunächst ausgebildet, um den Radarstrahl AziBeam mit einer Antennen-Halbwertsbreite 240 in das Raumgebiet 70 abzustrahlen und von dort Signale zu empfangen. Das Raumgebiet 70 umfasst beispielsweise eine turbulente Wettersituationen, die infolge der Relativgeschwindigkeit des Flugfahrzeugs 300 nicht nur zu einer Dopplerverschiebung der Radarsignale führt, sondern auch zu einer Verbreiterung (der Doppleraufweitung) führen kann.

Das Flugfahrzeug 300 bewegt sich beispielhaft mit der Eigengeschwindigkeit v und falls das erfasste Raumgebiet 70 eine gefährliche Wettersituation aufweisen sollte, kann das Flugobjekt 300 basierend darauf das Ausweichmanöver 350 fliegen, um das Durchfliegen zu vermeiden. Das Ausweichmanöver kann rein automatisch, radargesteuert erfolgen.

Ein Hauptmerkmal von kritischen Regengebieten sind stark wechselnde Windgeschwindigkeiten im Regengebiet, die nachfolgend "Turbulenzen" genannt. Diese Turbulenzen können mit manchen größeren Bordwetterradarsysteme infolge der unterschiedlichen Dopplergeschwindigkeiten in den Reflexionen angezeigt werden und entsprechend der Stärke hervorgehoben werden (z.B. farblich). Dies funktioniert allerdings nur mit kleinen Antennenhalbwertsbreiten zufriedenstellend (z.B. im Bereich von 3°). Bei Radargeräten mit einer größeren Antennenhalbwertsbreite erzeugt die Halbwertsbreite bereits inhärent eine Dopplerverbreiterung der reflektierten Signale. Dies erschwert eine Detektion der Turbulenzen. Ebenso tritt in seitlichen Ablagen - bedingt durch die Eigenbewegung und der Stahlbreite (Beambreite) - eine Doppleraufweitung auf, und zwar nur auf Grund der Dynamik und nicht aufgrund des Szenarios. Diese unerwünschte Doppleraufweitung maskiert den eigentlichen Effekt, der detektiert werden soll.

Um diesen negativen Effekt zu vermeiden, nutzen Ausführungsbeispiele die Monopulsfähigkeit moderner Geräte, um die oben genannte, inhärente Strahlbreitenbedingte Doppleraufweitung bis zu einem gewissen Grad im Rahmen der Signalverarbeitung zu kompensieren. Dies reduziert den unerwünschten Effekt, sodass auch bei größeren Ablagewinkeln die Doppler-Aufweitung auf Grund des Wetters zuverlässig gemessen werden kann und rechtzeitig Ausweichmanöver ausgeführt werden können.

Zur Bestimmung der kritischen Wettersituation wird gemäß Ausführungsbeispielen eine Feinpeilung durchgeführt, die eine genaue Lage eines beispielhaften Pixels 75 innerhalb der Antennen-Halbwertsbreite 240 ermittelt. Hierzu kann beispielsweise ein Phasenmonopulsverfahren genutzt werden, bei dem ein oder mehrere Sendepuls(e) ausgesendet werden und zumindest zwei Empfangsantennen 210, 220 reflektierte Empfangssignale empfangen, um aus einer Phasendifferenz der reflektierten Empfangssignale einen genauen Winkel AziMopu des Pixels 75 als Feinpeilung zu ermitteln. Die Feinpeilung kann beispielsweise relativ zu einer Grobpeilung AziBeam (= Abstrahlrichtung des Antennensignals) ermittelt werden. Die Blickrichtung (Grobpeilung AziBeam) selber ist auch bekannt.

Wenn der genaue Azimutwinkel AziMopu des Pixels 75 bestimmt wurde, kann unter Verwendung der bekannten Relativgeschwindigkeit v eine Kompensation der Radarsignale durchgeführt werden und als kompensierte Darstellung 150 der Radarsignale bereitgestellt werden.

Gemäß Ausführungsbeispielen wird der Radarstrahl mit einer Beam- oder Strahlbreite 240 in einen Azimutwinkel AziBeam abgestrahlt und ist schwenkbar mit einem Schwenkwinkel von etwa maximal 40 Grad (oder in einem Bereich von 30 bis 50 Grad gemessen von dem Eigengeschwindigkeitsvektor v). Zu jedem Abstrahlwinkel AziBeam werden die empfangenen Radarsignal analysiert und können in eine Range-Doppler-Matrix dargestellt werden, sodass zu dem erfassten Raumgebiet eine Vielzahl von Pixeln 75 gehören, die jeweils zu einem Entfernungsbereich (Range-Gate) und einem Dopplerbereich (Doppler-Gate) gehören und in ihrer Gesamtheit die Range-Doppler-Matrix bilden. Der Dopplerbereich entspricht der Dopplerverschiebung (z.B. Frequenzverschiebung infolge der Relativbewegung) für den jeweiligen Pixel. Da das Sendesignal eine bestimmte Frequenz hat, sollten die Empfangssignale, wenn keine Turbulenzen vorliegen, in der Range-Doppler-Matrix in Vorausrichtung mehr oder weniger eine Frequenzlinie bilden. Eine Verbreiterung dieser Linie kann, wie bereits gesagt, verschiedene Ursachen haben und Ausführungsbeispiele kompensieren wetterunabhängige Effekte.

**Fig. 3** zeigt weitere Details zur Durchführung der Feinpeilung, um den Azimutwinkel AziMopu zu bestimmen. Dazu zeigt die Fig. 3 einen vorderen Teil des Flugfahrzeugs 300 mit dem Radarsystem 200. Das Radarsystem 200 umfasst eine erste Antenne 210 (z.B. eine linke Antenne AL) und eine zweite Antenne 220 (z.B. rechte Antenne AR), die mit einer Basisbreite 225 voneinander beabstandet sind. Außerdem umfasst das Radarsystem 200 eine Auswerteeinheit 230. Die Auswerteeinheit 230 umfasst eine Einrichtung 231 zur Differenzermittlung und eine Einrichtung 232 zur Summenbildung, die ausgebildet sind, um Summen/Differenzen zwischen den Empfangssignalen der ersten Antenne 210 und der zweiten Antenne 220 zu bilden. In einer Detektionseinrichtung 233 der Auswerteeinheit 230 kann z.B. ein Verhältnis aus dem Differenzsignals und dem Summensignals gebildet werden, aus dem sich der Feinpeilungswinkel AziMopu für den Pixel 75 ermittelt bzw. durch einfache mathematische Umformungen ermittelbar ist.

Mit Hilfe der genauen Ablage vom Eigengeschwindigkeitsvektor v, kann der Dopplereffekt aufgrund der Eigenbewegung ermittelt werden und so die Lage eines jeden Pixels in der Range-Dopplermatrix verändert (da sich der Dopplerwert ändert) und dadurch kompensiert werden (in dem jeweiligen Dopplerwert wird der wetterunabhängige Anteil herausgerechnet). Als Resultat wird im Idealfall nur eine Dopplerverbreiterung der Linie übrigbleiben, die durch das Wetter ausgelöst wurde.

Der genaue Azimutwinkel ergibt sich daher aus:

$$Azi = AziBeam \quad + \quad AziMopu \, , \qquad\qquad (1)$$

wobei AziBeam der Winkel gemäß Grobpeilung und AziMopu die Korrektur gemäß Feinpeilung darstellt. Mit diesem Azimutwinkel Azi wird die Dopplerverschiebung $fd_{DGVeigen}$ berechnet, die durch die bekannte Eigengeschwindigkeit v verursacht wird:

$$fd_{DGVeigen} = \cos(Azi) * 2\, v/lambda \, , \qquad\qquad (2)$$

wobei lambda die Radarwellenlänge ist (z.B. 0,03 m). Damit können jetzt die rein wetterverursachte Dopplerverschiebung $fd_{DGkompensiert}$ für das betreffenden Doppler-Gate (d.h. des Pixels 75) durch Differenzbildung mit dem Pixelwert $fd_{DG}$ in der Rang-Doppler-Matrix kompensiert werden:

$$fd_{DGkompenisert} = fd_{DG} - fd_{DGVeigen} \, . \qquad\qquad (3)$$

Die Doppleraufweitung in Doppler-Gates (AziBeam, Beambreite, V) ergibt sich für die Situation aus der Fig. 2 aus der Differenz der Dopplerwerte am linken und rechten Azimutrand des Radarstrahls (siehe Randlinien des Bereiches 240):

$$Differenz\ Doppler \ =$$

$$( \cos(AziBeam-Beambreite/2) - \cos(AziBeam+Beambreite/2) ) * 2\, V/lamda \ =$$

$$\sin(AziBeam) * Beambreite * 2 * V/lamda = AziBeam * Beambreite * 2\, V/Lamda, \ (4)$$

wobei eine übliche Taylor-Näherung für kleine Winkel genutzt wurde (bei kleinen Winkeln gilt sin(X) = X). In Doppler-Gates ergibt das die Gerade

$$\text{Differenz Doppler[DG]} = \text{AziBeam (Beambreite 2 V/lamda)/DGbreite .} \quad (5)$$

Für die beispielhaften Werte aus der Tabelle 1 (siehe unten) ergibt sich:

$$\text{Differenz Doppler[DG]} = 0.8 \text{ DG} * \text{AziBeam[Grad] .} \quad (6)$$

Tabelle 1: gibt Definitionen von Variablen und repräsentative Beispielwerte an, wie sie auch in der Simulation unten genutzt wurden.

| Variable Einheiten [m, s,rad,Hz] | Bedeutung | Werte-Bereich oder Wert |
|---|---|---|
| AziBeam | Abweichung Blickrichtung Beammitte von Geschwindigkeitsvektor in Azimutebene | [0,35] Hier 10.7 |
| Beambreite | 3dB Einweg-Beambreite im Azimut. | 10 |
| Basisbreite | Abstand Teilantennen Mittelpunkte im Azimut | 0,115 |
| AziMopu | Azimut im Beam, der hier durch Monopuls feingepeilt wird | [-5,5] |
| Azi | Azimut der RD-Zelle relativ zum Geschwindigkeitsvektor Es gilt hier: Azi = AlphaBeam + AziMopu | < 40 Grad |
| Phi | Hälfte der Phase zwischen rechten und linkem Kanal oder Phasen zwischen Gesamt Anten-nenmitte (zwischen den Kanälen) und Einzelantennenmitte | [0,90] |
| D | Doppler | [0,prf] [0,3000] |
| DG | Doppler-Gate | |
| DGBreite | Breite Doppler-Gate | je 46,875 (Breite) |
| DGMax | Maximal DG | DG Dimension RD-Matrix |
| R | Range (Entfernung) | [0,12000] |
| RG | Range-Gate | |
| RGBreite | | je 150 (Breite) |
| RGMax | maximal ausgewertetes RG | RG Dimension RD-Matrix |
| v | Geschwindigkeitsbetrag, z.B. der Drohne | 195 m/s (Beispiel) |
| S/N | Signalleistung zu Rauschleistung | z.B. 100 linear oder 20dB |
| AL,AR | Signalamplituden linke oder rechte Antenne | |
| N | Rauschleistung | |
| S | Signalleistung (hier aus einem Doppler Gate) | |
| ANxx ANRr,ANRi ANLr,ANLi | Rauschamplituden, Kanäle oder "Richtung" real oder imaginär z.B. NRr Rauschamplitude rechter Kanal (Realteil) | |
| ErrAzi | Berechneter Messfehler Monopuls-Peilung | 0,34 |
| lamda | Radar-Wellenlänge | 0,03 |

Gemäß weiteren Ausführungsbeispielen werden auftretende Fehler kompensiert. Beispielsweise kann es zu einem Fein-Peilfehler des Pixels 75 kommen, der gemäß dem Phasenmonopuls-Verfahren im Azimut sich wie folgt ausdrücken lässt:

$$\mathrm{AziError(Azi) = (lamda/(pi * Basisbreite))/(sqrt(2 * S/N)} \,, \qquad (7)$$

wobei die Basisbreite der Antennenabstand für die Antennen 210, 220 für die Phasenmonopulspeilung ist und S/N das Signal/Rausch-Verhältnis darstellt. Diese Fehlerabschätzung liefert einen Toleranzbereich von z.B. +/- 0,34 Grad für die Werte, wie sie in der Tabelle 1 genannt sind.

Ein weiterer potentieller Fehler liegt in der Berechnung des Dopplerbereiches (DGate). Die Breite eines Doppler-Gates entspricht einer Winkeldifferenz im Azimut im Beispiel aus der Tabelle 1 von ungefähr

$$\mathrm{Beambreite/Anzahl\ DGs\ im\ Radarstrahle = 10,7/9 = 1,2\ Grad} \,. \qquad (5)$$

Außerdem ist Diskretisierungsfehler in Grad zu berücksichtigen, der in dem Beispiel der Tabelle 1 wie folgt ermittelt werden kann:

$$\mathrm{deltaDiskretDG = (Beambreite/DG)/sqrt(12) = (10,7/9)/3,46 = 0.34\ Grad} \,. \qquad (6)$$

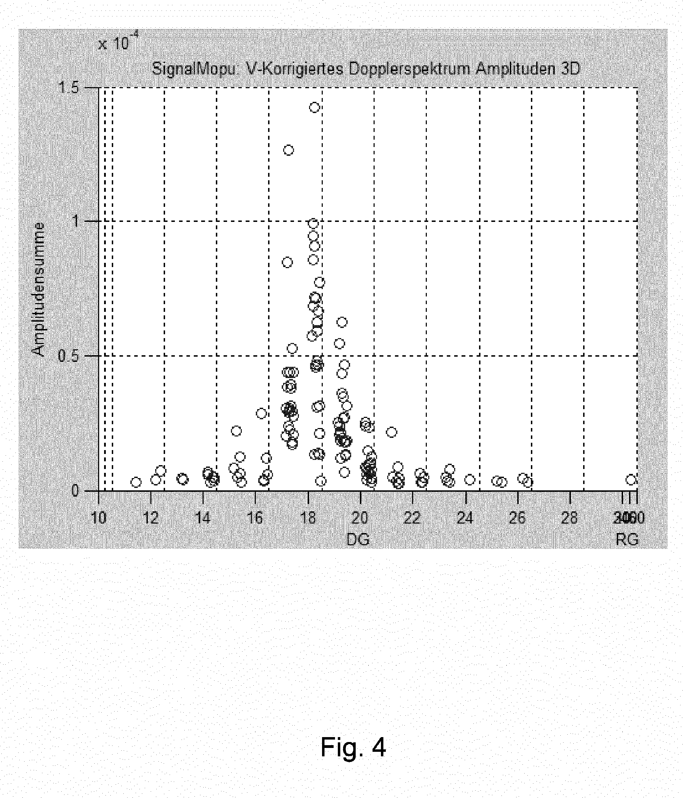

Der Peilfehler und der Diskretisierungsfehler sind zufällig gleich für S/N = 20dB. Beide Fehler entsprechen zusammen etwa ½ der Breite des Doppler-Gates. Daher ist zu erwarten, dass es oftmals zu einem Umklappen links und rechts des idealen Doppler-Gates kommen wird, was in der Simulation der Radarsignalverarbeitung in der folgenden Fig. 4 zu sehen ist.

**Fig. 4** zeigt beispielhaft eine Simulation für die Radarsignalverarbeitung. Im Detail ist die Abhängigkeit der Amplitudensumme von den Dopplerverschiebungen dargestellt. Das Signal-Rauschverhältnis S/N beträgt ca. 20dB beträgt und eine Verbreiterung von z.B. 9 Doppler-Gates ohne Kompensation wurde gemäß Ausführungsbeispiel mittels der Kompensation durch Feinpeilung erheblich reduziert. Die beispielhaften Signale häufen sich in einem Bereich zwischen den Dopplergates 17 und 19. In der Simulation hat jedes Dopplergate beispielhaft einen Frequenzbereich von 46,875 Hz, wobei das Maximum die Dopplerverschiebung infolge der Relativbewegung zwischen dem Flugobjekt und dem Regengebiet darstellt und die Verbreiterung ein Maß dafür ist, wie stark Turbulenzen in dem jeweiligen Raumgebiet vorhanden sind, die teilweise die Dopplerverschiebung verstärken bzw. abschwächen. Die wetterunabhängigen Beiträge zur Dopplerverbreiterung wurden gemäß Ausführungsbeispielen herausgerechnet.

Die Verbreiterung von insgesamt 9 Doppler Gates in diesem Beispiel vermindert sich auf ca. +/-1 Doppler-Gate durch das Kompensationsverfahren gemäß Ausführungsbeispielen, wobei ein Sigma von +/-4,5 Doppler-Gates angenommen wurde. Daher liefern Ausführungsbeispiele eine Verbesserung um einen Faktor von ca. 4.

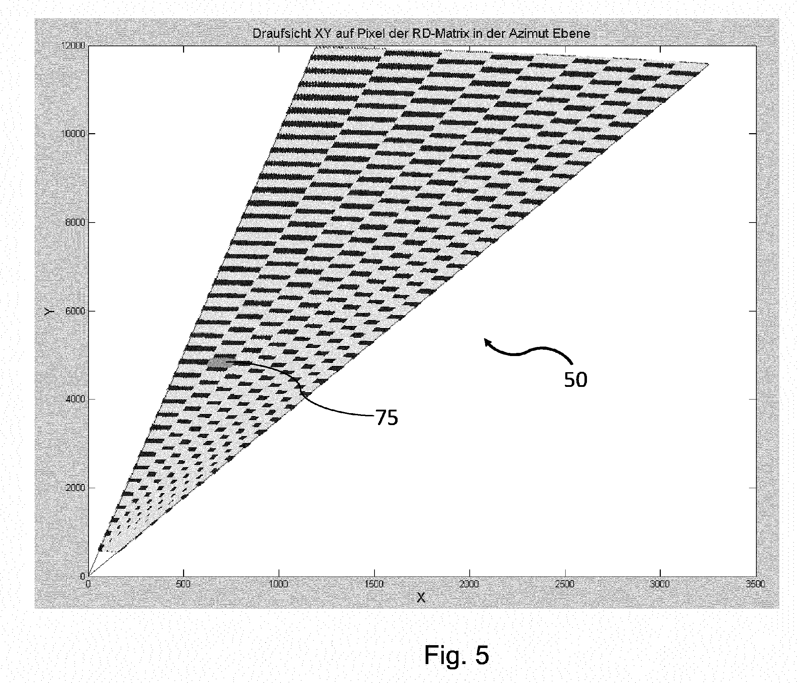

**Fig. 5** zeigt eine beispielhafte Draufsicht (Azimut-Ebene) auf die einzelnen Pixel in dem erfassten Winkelraumgebiet 240, der von der Antenne ausgeleuchtet wird (z.B. +/- 3 dB Empfindlichkeitsbereich der Antenne). Die Anfluggeometrie kann aus Fig. 2 und die zugrunde liegenden beispielharten Werte aus der Tabelle 1 entnommen werden. In dieser Darstellung 50 ist jedes Kästchen ein Pixel, das zu einer bestimmten Entfernung und einem Azimutwinkel korreliert und für dem die Dopplerverschiebung ermittelt wird.

Die Anzahl von Dopplerzellen, die sich im Antennenpattern befinden, entsprechen der Dopplerverbreiterung durch die Radareigenbewegung im Strahl. Es ist ähnlich zu einem Radar mit einer synthetischer Apertur (SAR-System), allerding umfasst es auch Szenarien, bei denen Wettergebiete mit addierten Geschwindigkeitsvektoren großer Variabilität vorliegen.

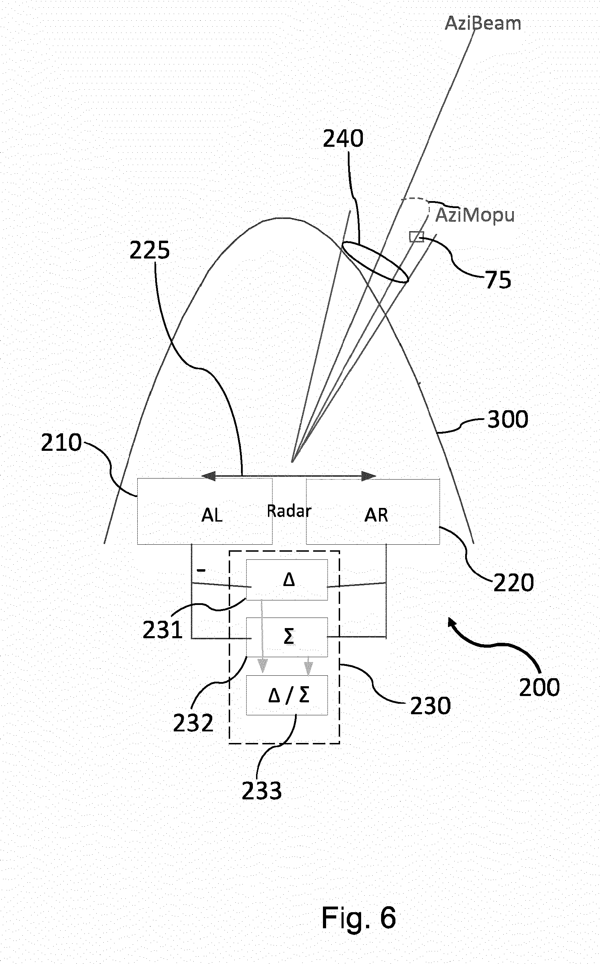

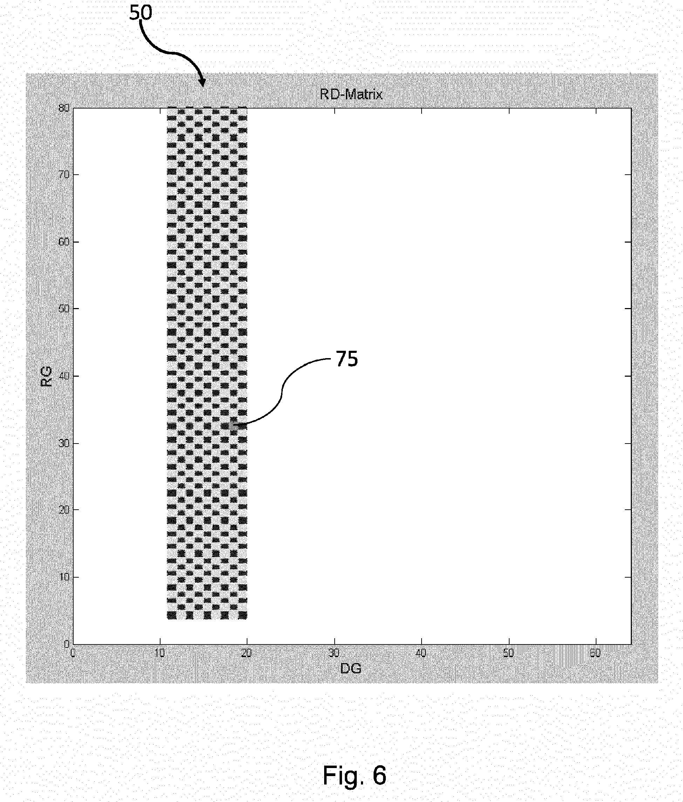

**Fig. 6** zeigt beispielhaft eine Entfernungs-Doppler-Matrix 50, wie sie in Ausführungsbeispielen als Darstellung 50 der Radarsignale genutzt wird. Das Rastermuster von Pixeln ist jetzt nicht in der Draufsicht (wie in Fig. 5) dargestellt, sondern direkt in Bezug in den Entfernungs- und Dopplerbereichen. Auf der vertikalen Achse sind dabei die Entfernungsbereiche (Range-Gates) und auf der horizontalen Achse die Dopplerbereiche (Doppler-Gates) dargestellt, wobei beispielsweise 9 Doppler-Gates mit jeweils einer Frequenzbandbreite von ca. 46 Hz genutzt werden. Das beispielhafte Pixel 75 ist wiederum mit einer Entfernungswert 32 und einen Dopplerwert 19. Dies bedeutet für das genutzte Beispiel, das Raumgebiet zu dem Pixel 32 Entfernungs-Gates zu je 150 m Breite entfernt ist (d.h. ca. 4,8 km Entfernung) und eine Dopplerverschiebung von 19 Doppler-Gates zu je ca. 46 Hz aufweist (d.h. eine Dopplerverschiebung von beispielhaft 874 Hz), wobei die beispielhafte Radarwellenlänge 3 cm beträgt.

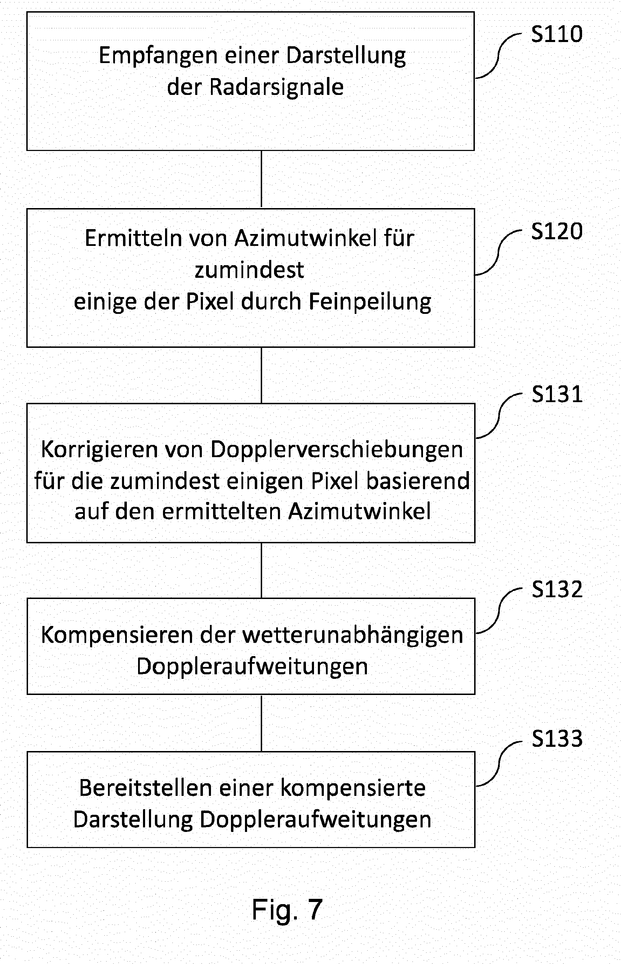

**Fig. 7** zeigt ein Flussdiagramm für ein Verfahren zum Kompensieren von wetterunabhängigen Doppleraufweitungen in Radarsignalen eines Wetterradarsystems 200. Das Verfahren umfasst:

- Empfangen S110 einer Darstellung 50 der Radarsignale, wobei die Darstellung 50 Pixel einer Entfernung-Doppler-Matrix umfasst;
- Ermitteln S120 von Azimutwinkel Azi für die Pixel 75 durch Feinpeilung;
- Korrigieren S131 von wetterunabhängige Dopplerverschiebungen für die Pixel 75 basierend auf den ermittelten Azimutwinkel Azi; AziMopu;
- Kompensieren S132 der wetterunabhängigen Doppleraufweitungen; und
- Bereitstellen S133 einer kompensierte Darstellung 150.

Das Verfahren kann als weitere optionale Schritte alle Funktionalitäten umfassen, wie sie für die Vorrichtung oder dem Wetterradarsystem beschrieben wurden.

Vorteile von Ausführungsbeispiele können wie folgt zusammengefasst werden:

Durch die Kompensation gemäß Ausführungsbeispiele können kritische Wetterlagen in größeren Ablagewinkeln Azi-Beam vom Geschwindigkeitsvektor v zuverlässig erkannt werden. Bei der quantitativen Abschätzung ist einerseits zu beachten, dass der wetterunabhängige Verbreiterungseffekt kleiner sein sollte als das vom Wetter verursachte kritische Sigma (Standardabweichung, d.h. wetterbedingte Verbreiterung) von mindestens 2 - 3 Doppler-Gates.

Außerdem besteht eine lineare Beziehung zwischen einer Winkelaufweitung deltaDG in Doppler-Gates und dem Ablagewinkel AziBeam vom Geschwindigkeitsvektor von:

$$\text{deltaDG} = 0.8 * \text{Ablagewinkel} . \qquad (8)$$

Ohne Kompensation bedeuten die kritischen 2 - 3 Doppler-Gates, dass Ablagewinkel von 3 bis 4,5 Grad erlaubt wären. In diesem Bereich könnten immer noch wetterbedingte Verbreiterungen zuverlässig detektiert werden. Die Kompensation gemäß Ausführungsbeispielen führt zu einer Verbesserung um einen Faktor 4 (siehe weiter oben), sodass mit Kompensation Ablagewinkel von 12 bis 18 Grad erlaubt wären (wegen der Linearität). Dies ist eine deutliche Steigerung des Ablagewinkels vom Geschwindigkeitsvektor v, bei dem eine Detektion einer kritischen Wetterlage zuverlässig möglich sein sollte. Dadurch wird ebenfalls der Erfolg von Ausweichmanövern insgesamt verbessert.

Insgesamt können somit auch bei höheren Ablagewinkeln die Doppler-Aufweitungen auf Grund des turbulenten Wetters gemessen werden und rechtzeitig Ausweichmanöver vor dem "Wetter" geflogen werden, um die autonom fliegende beispielhafte Drohne 300 nicht zu beschädigen. Das Verfahren ermöglicht kleineren Bordradaranlagen (z.B. 25 cm Antennengröße) eine Leistungsfähigkeit in der Detektion von Turbulenzen, die bei herkömmlichen Bordwetterradarsystemen ohne Monopulsfähigkeit einen Antennengröße im Bereich von mehr 50 cm erfordern würde.

Die in der Beschreibung, den Ansprüchen und den Figuren offenbarten Merkmale der Erfindung können sowohl einzeln als auch in beliebiger Kombination für die Verwirklichung der Erfindung wesentlich sein.

BEZUGSZEICHENLISTE

| | |
|---|---|
| 50 | Darstellung von Radarsignalen (z.B. als Entfernungs-Doppler-Matrix) |
| 70 | erfasstes Raumgebiet |
| 75 | Pixel der Darstellung |
| 100 | Vorrichtung zum Kompensieren |
| 110 | Empfangseinrichtung |
| 120 | Ermittlungseinrichtung |
| 130 | Kompensationseinrichtung |
| 150 | kompensierte Darstellung basierend auf kompensierte Radarsignalen |
| 200 | Wetterradarsystem |
| 215 | Antennensystem |
| 210, 220 | Antennen für ein Monopulsverfahren |
| 225 | Basisbreite der Monopulsantennen |
| 230 | Auswerteeinrichtung |
| 231,232,... | Komponenten der Auswerteeinrichtung |
| 240 | Strahlbreite des Antennensystems |
| 300 | Flugfahrzeug (Drohne, Flugzeug, Helikopter etc.) |
| 350 | Ausweichmanöver |
| Azi | Azimutwinkel |
| AziBeam | Grobpeilung für Azimutwinkel |

AziMopu     Feinpeilung für Azimutwinkel
v           Relativgeschwindigkeit (Geschwindigkeitsvektor)

**Patentansprüche**

1. Eine Vorrichtung (100) zum Kompensieren von wetterunabhängigen Doppleraufweitungen in Radarsignalen eines Wetterradarsystems (200), die Vorrichtung umfasst:

   eine Empfangseinrichtung (110) zum Empfangen einer Darstellung (50) der Radarsignale, wobei die Darstellung Pixel einer Entfernung-Doppler-Matrix umfasst;
   eine Ermittlungseinrichtung (120), die ausgebildet ist, um für die Pixel (75) Azimutwinkel (Azi) durch Feinpeilung zu ermitteln; und
   eine Kompensationseinrichtung (130), die ausgebildet ist, um wetterunabhängige Dopplerverschiebungen für die Pixel (75) basierend auf den ermittelten Azimutwinkel (Azi; AziMopu) zu korrigieren und so die wetterunabhängigen Doppleraufweitungen zu kompensieren und als eine kompensierte Darstellung (150) bereitzustellen.

2. Die Vorrichtung (100) nach Anspruch 1, wobei die Ermittlungseinrichtung (120) ausgebildet ist, um zur Feinpeilung ein Phasenmonopulsverfahren zu nutzen.

3. Die Vorrichtung (100) nach Anspruch 1 oder Anspruch 2, wobei die Kompensationseinrichtung (130) ausgebildet ist, um beim Kompensieren eine oder mehrere der folgenden Ursachen für die wetterunabhängigen Doppleraufweitungen zu berücksichtigen:

   - eine Eigenbewegung (v) des Wetterradarsystems (200),
   - einer Abstrahlbreite (240),
   - einen Ablagewinkel (AziBeam).

4. Die Vorrichtung (100) nach Anspruch 3, soweit rückbezogen auf Anspruch 2,
   wobei das Wetterradarsystem (200) ausgebildet ist, um eine turbulentes Wetter in einem Raumgebiet (70) zu detektieren und eine Grobpeilung (AziBeam) vorzunehmen,
   und wobei die Ermittlungseinrichtung (120) ausgebildet ist, um den Azimutwinkel (AziMopu) für jeden Pixel des Raumgebietes (70) relativ zur Grobpeilung (AziBeam) über die Feinpeilung zu ermitteln, und
   die Kompensationseinrichtung (130) ausgebildet ist, um für jeden Pixel des Raumgebietes (70) die Eigenbewegung (v) zu kompensieren.

5. Ein Wetterradsystem (200) mit:

   einer Auswerteeinheit (230), die ausgebildet ist, um Radarsignale zu empfangen und basierend auf den Radarsignalen die Darstellung (50) in Form der Entfernungs-Doppler-Matrix zu erzeugen; und
   einer Vorrichtung nach einem der vorhergehenden Ansprüche.

6. Das Wetterradarsystem (200) nach Anspruch 5, wobei die Auswerteeinheit (230) ausgebildet ist, um die Darstellung unter Nutzung eines Puls-Doppler-Verfahrens zu erzeugen.

7. Das Wetterradsystem (200) nach Anspruch 5 oder Anspruch 6, wobei die Auswerteeinheit (230) ausgebildet ist, um die Darstellung (50) derart zu erzeugen, dass jedes Pixel einen Dopplerwertebereich und einen Entfernungswertebereich bildet.

8. Das Wetterradarsystem (200) nach einem der Ansprüche 5 bis 7, das weiter ein Antennensystem (215) mit einer Antennenhalbwertsbreite aufweist, die größer ist als 3° oder größer ist als 5° oder größer ist als 10°.

9. Das Wetterradsystem (200) nach Anspruch 8, wobei das Antennensystem (215) um einen Schwenkwinkel von maximal 40° schwenkbar ist.

10. Das Wetterradsystem (200) nach einem der Ansprüche 5 bis 9,
    wobei die Auswerteeinheit (230) ausgebildet ist, um eine Grobpeilung basierend auf einer momentanen Ausrichtung (240) des Antennensystems (215) und einer Antennencharakteristik zu veranlassen, und

wobei die Ermittlungseinrichtung (120) ausgebildet ist, um die Feinpeilung innerhalb der Grobpeilung zu veranlassen.

11. Das Wetterradarsystem (200) nach einem der Ansprüche 5 bis 10, wobei die Auswerteeinheit (230) weiter ausgebildet ist, um eine Wertung der kompensierten Darstellung (150) vorzunehmen und basierend darauf zumindest eine der folgenden Reaktionen zu veranlassen:

- Darstellen von turbulentem Wetter in dem Raumgebiet (70) auf einer Anzeige,
- Warnen vor dem turbulentem Wetter bei Überschreiten von einem Grenzwert,
- Auslösen eines Ausweichmanövers (350) für das Flugfahrzeug, um das Raumgebiet (70) zu umfliegen.

12. Flugfahrzeug mit einem Wetterradarsystem nach einem der Ansprüche 5 bis 11.

13. Ein Verfahren zum Kompensieren von wetterunabhängigen Doppleraufweitungen in Radarsignalen eines Wetterradarsystems (200), das Verfahren umfasst:

Empfangen (S110) einer Darstellung (50) der Radarsignale, wobei die Darstellung (50) Pixel einer Entfernung-Doppler-Matrix umfasst;
Ermitteln (S120) von Azimutwinkel (Azi) für die Pixel (75) durch Feinpeilung;
Korrigieren (S131) von wetterunabhängige Dopplerverschiebungen für die Pixel (75) basierend auf den ermittelten Azimutwinkel (Azi; AziMopu);
Kompensieren (S132) der wetterunabhängigen Doppleraufweitungen; und
Bereitstellen (S133) einer kompensierte Darstellung (150).

Fig. 1

Fig. 2

Fig. 6

Fig. 4

Fig. 5

Fig. 6

Empfangen einer Darstellung
der Radarsignale

S110

Ermitteln von Azimutwinkel für
zumindest
einige der Pixel durch Feinpeilung

S120

Korrigieren von Dopplerverschiebungen
für die zumindest einigen Pixel basierend
auf den ermittelten Azimutwinkel

S131

Kompensieren der wetterunabhängigen
Doppleraufweitungen

S132

Bereitstellen einer kompensierte
Darstellung Doppleraufweitungen

S133

Fig. 7

**Europäisches Patentamt**
**European Patent Office**
**Office européen des brevets**

## EUROPÄISCHER RECHERCHENBERICHT

Nummer der Anmeldung

EP 20 18 4520

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CN 106 054 195 B (UNIV CIVIL AVIATION CHINA) 6. Juli 2018 (2018-07-06) * das ganze Dokument * ----- | 1-13 | INV. G01S13/95 G01S7/41 G01S7/292 |
| Y | YADIN E: "A performance evaluation model for a two port interferometer SAR-MTI", THE PROCEEDINGS OF THE 1996 IEEE NATIONAL RADAR CONFERENCE : HELD AT THE UNIVERSITY OF MICHIGAN, ANN ARBOR, MICHIGAN, 13 - 16 MAY, 1996, IEEE, NEW YORK, NY, USA, 13. Mai 1996 (1996-05-13), Seiten 261-266, XP010164763, DOI: 10.1109/NRC.1996.510691 ISBN: 978-0-7803-3145-7 * Seite 261, linke Spalte, Zeile 20 - Zeile 24 * * Seite 261, rechte Spalte, Zeile 20 - Seite 263, rechte Spalte, Zeile 24 * * Abbildungen 1, 2 * * equations 1-4, 6-9, 14 * ----- | 1-13 | G01S13/18 G01S13/44 G01S13/58 G01S13/60 |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 7. Dezember 2020 | Köppe, Maro |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 18 4520

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2020

| Im Recherchenbericht angeführtes Patentdokument | Datum der Veröffentlichung | Mitglied(er) der Patentfamilie | Datum der Veröffentlichung |
|---|---|---|---|
| CN 106054195 B | 06-07-2018 | KEINE | |

Für nähere Einzelheiten zu diesem Anhang : siehe Amtsblatt des Europäischen Patentamts, Nr.12/82

EPO FORM P0461